# EUROPEAN PATENT APPLICATION

(11) **EP 1 955 600 A1**
(43) Date of publication of application: **13.08.2008**
(21) Application number: 07101124.1
(22) Date of filing: 24.01.2007
(51) Int. Cl.: A23L 1/00, A23L 1/0522, A23L 1/164, A23L 1/217

(54) **Expanded, low-salt snack product comprising high-amylopectin starch**

(71) Applicant: Coöperatie AVEBE U.A., 9641 GK Veendam (NL)
(72) Inventor: de Vries, Hendrik Jan, 9551 TW Sellingen (NL)
(74) Representative: van Loon, C.J.J.

(57) **Abstract**

The invention relates to a base dough for preparing an expanded snack food product. The invention also relates to a process for preparing an expanded snack food product from said base dough, as well as to the prepared snack food product itself. In accordance with the invention very low amounts of salt are used in the base dough, without any significant adverse effect on the expansion and texture of the final snack food product.

## Description

The invention relates to a base dough for preparing an expanded snack food product. The invention also relates to a process for preparing an expanded snack food product from said base dough, as well as to the prepared snack food product itself.

Expanded snack food products have been available for a long time and appear in many different forms and flavours. Mostly, they are marketed in the form of savoury snacks, such as extruded snacks, coated nuts, Japanese style snacks, potato crisps (chips), etc.

The expansion of the product is generally achieved by heating a base dough to a temperature higher than its glass transition temperature and then expanding it, for instance by blowing the plasticized mass to a foam using a gas. The obtained foam is cooled to below the glass transition temperature whereby the expanded dough settles and a stable, glassy or crispy expanded foam is obtained. Important characteristics of this type of product are, besides flavour, texture and shape. These determine the attractiveness of the product to the consumer. The texture can be mostly attributed to the crispiness and extent of expansion.

From a health perspective, this type of snack product has grown to have a bad reputation. It usually has a relatively high fat and salt content, making it a prime target of concern in the age of cardiovascular disease.

Many efforts have been made to produce snack products having a reduced fat content. Because fat improves flavour and palatability of this type of snack product, it is not easy to produce a low-fat snack product having similar flavour and texture as normal snack products.

Salt, in particular because it is considered to be the main source of sodium ions in the diet, is strongly debated for its role in causing high blood pressure. A survey of the use and functions of salt as an ingredient in many different categories of food products, including snack food products, was published by the UK Food and Drink Federation in the British Food Journal, Vol. 104, No. 2, 2002, pp. 84-125. Reductions in sodium content in many food products is limited primarily by consumer taste preferences and thus consumer demand. Manufacturers of food products will not produce food products having a reduced sodium content if consumers will not buy them. Notwithstanding that, many attempts are still made to produce good quality food products having reduced sodium levels. Generally, technological constraints to reducing sodium content of food products can be categorized in product safety (e.g. preservation and shelf-life), quality (e.g. texture and function), taste, and cost.

In snack products, salt serves a variety of technological functions. It assists preservation and reduces or prevents spoilage, inter alia in that it prevents the growth of micro-organisms. It imparts flavour by itself and by enhancing the flavour contribution from other ingredients. It assists the flowability and adherence of flavour powders to the product. These powders are usually applied to the snack product after baking/frying and the presence of salt in them aids their processability and facilitates their application.

Another important role that salt serves in snack food products is that it regulates expansion. To this end, salt is included in the base dough before expansion in an amount of 2-3 wt.%, based on the weight of the dough. Because of this role, the opportunity to impact significantly on salt levels in the finished product have proven relatively elusive in expanded snacks. Lowering the salt content in the base dough has the result that there is less expansion and, consequently, and unacceptable product texture.

The present invention provides a base dough for preparing an expanded snack food product which, in spite of a low salt content, has excellent expansion characteristics. Surprisingly, it has been found that using a starch having an amylopectin content of at least 95 wt:%, based on dry weight, and/or a derivative thereof as the starch in the base dough, the salt content can be lowered without any significant adverse effect on the expansion of the dough, and thus on the texture of the final snack product. Other advantages of the invention will become apparent from the following description.

Thus, in one broad aspect the invention concerns a base dough for preparing an expanded snack food product comprising:
- a starch having an amylopectin content of at least 95 wt.%, based on dry weight, and/or a derivative thereof
- at most 0.5 wt.%, based on the weight of the base dough, of salt
- water.

In another broad aspect the invention concerns a process for preparing an expanded snack food product comprising subjecting a base dough according to the invention to a baking and/or frying step.

In yet another aspect the invention concerns a snack product obtainable by said process.

The base dough according to the invention can be a dough, but also a batter, such as a fritter or tempura batter, for instance for providing a coating on a snack food (e.g. coated nuts).

An important aspect of the invention is the choice of starch or starch derivative in the base dough. In accordance with the invention, the starch is an amylopectin starch, i.e. a starch having a very high amylopectin content.

Most starch types consist of granules in which two types of glucose polymers are present. These are amylose (typically 15-35 wt.% on dry substance) and amylopectin (typically 65-85 wt.% on dry substance). Amylose consists of unbranched or slightly branched molecules having an average degree of polymerization of 1000 to 5000, depending on the starch type. Amylopectin consists of very large, highly branched molecules having an average degree of polymerization of 1,000,000 or more. The commercially most important starch types (maize starch, potato starch, wheat starch and tapioca starch) contain 15 to 30 wt.% amylose.

Of some cereal types, such as barley, maize, millet, wheat, milo, rice and sorghum, there are varieties of which the starch granules nearly completely consist of amylopectin. Calculated as weight percent on dry substance, these starch granules contain more than 95%, and usually more than 98% amylopectin. The amylose content of these cereal starch granules is thus less than 5%, and usually less than 2%. The above cereal varieties are also referred to as waxy cereal grains, and the amylopectin-starch granules isolated therefrom as waxy cereal starches.

In contrast to the situation of cereals, root and tuber varieties of which the starch granules nearly exclusively consist of amylopectin are not known in nature. For instance, potato starch granules isolated from potato tubers usually contain about 20% amylose and 80% amylopectin (wt.% on dry substance). Using genetic modification or classic breeding techniques, it has meanwhile been found possible to cultivate potato and tapioca plants which, in the roots or tubers, form starch granules consisting for more than 95 wt.%, or more than 98 wt.% (on dry substance) of amylopectin. It has even been found feasible to produce roots or tubers comprising substantially only amylopectin. Amylopectin starch from such potatoes is commercially available from Avebe, Veendam, the Netherlands, under the name Eliane®.

The composition and properties of root and tuber starches, such as amylopectin-potato starch and tapioca amylopectin-starch differ from those of the waxy cereal starches. Amylopectin-potato starch has a much lower content of lipids and proteins than the waxy cereal starches. Problems regarding odor and foaming, which, because of the lipids and/or proteins, may occur when using waxy cereal starch products (native and modified), do not occur or occur to a much lesser degree when using corresponding amylopectin-potato starch products. Also, when incorporated into food products, cereal starches give rise to an undesirable flavour which is peculiar to the starch. These off-flavours can be described as 'woody', 'corny', 'starchy', 'bitey' or 'chalky', and come out most poignant after heat treatment. Furthermore, in contrast to the waxy cereal starches, amylopectin-potato starch contains chemically bound phosphate groups. As a result, amylopectin-potato starch products in a dissolved state have a distinct polyelectrolyte character.

The invention contemplates the use of starches from cereal and fruit on the one hand, and root and tuber starches on the other hand. Of the cereal starches, waxy maize starch has proven suitable. In general, however, root and tuber starches are more preferred. As has been indicated above, it is advantageous to use a starch having a very low content of lipids and/or proteins. The presence of lipids and/or proteins increases the risk of undesired side reactions taking place, such as Maillard reactions. The use of amylopectin-potato starch and amylopectin-tapioca starch is particularly preferred.

Although it will often be less preferred because of the associated costs, it is possible that the starch, or part of the starch is a modified starch, or starch derivative. Suitable starch derivatives in this regard are starches that are cross-linked, stabilised, or both.

The starch may be cross-linked using for instance sodium trimetaphosphate, phosphorus oxytrichloride or adipic anhydride as cross-linking agent following a method known in the art. These cross-linking agents are most suitable for use in the food industry, but others can also be contemplated.

The starch may be stabilised by esterification, for instance with acetic anhydride or vinyl acetate, or by etherification, for instance by hydroxyalkylation, using a method known per se. Stabilisation by hydroxyalkylation may be achieved using reagents such as a halohydrin, or an epoxide group as reactive site. A preferred way of stabilising the starch is by hydroxypropylation. The addition of hydroxypropyl groups may be performed in aqueous suspensions of starch using propylene oxide.

Both cross-linking and stabilisation are generally performed under alkaline conditions. Suitable materials to provide the desired alkaline environment are sodium hydroxide, potassium hydroxide, ammonium hydroxide, magnesium hydroxide, sodium carbonate and trisodium phosphate. Sometimes different salts are added during the modification reaction to prevent swelling of the starch granules. For this purpose salts like sodium chloride or sodium sulphate are generally preferred. It is to be noted, however, that these salts are washed away prior to the use of the starch derivative in a base dough according to the invention. Accordingly, they do not contribute to the salt content of the base dough.

Part of the starch or starch derivative may be pregelatinised. It is, however, preferred that at least 75 wt.%, more preferably at least 80 wt.%, even more preferably at least 90 wt.%, based on the weight of the starch (including starch derivative, if present), of the starch or starch derivative is non-pregelatinised. Gelatinisation may be done by drum drying, spray cooking, spray drying, jet cooking, extrusion, heating in water or aqueous alcohol, or any other method known in the art.

Another important aspect of the invention is that the salt content of the base dough is low. In accordance with the invention, a base dough contains at most 0.5 wt.%, based on the weight of the base dough, of salt. In a preferred embodiment, the base dough contains less than 0.1 wt.%, based on the weight of the base dough, of salt. In an even more preferred embodiment, the base dough does not contain any salt. In the context of the invention, the term 'salt' is intended to include sodium chloride as well as any other salt commonly used in the food industry for obtaining the effects on taste and the like associated with sodium chloride. Examples of such other salts are sodium iodide, potassium salts, such as chloride, potassium iodide, and calcium salts, such as calcium chloride or calcium iodide. A base dough according to the invention at least has the above restrictions on sodium chloride content, but preferably has the same restrictions on the content of these other salts.

Depending on the nature and taste of the desired snack food product, a base dough according to the invention may comprise dehydrated potato, such as potato granules and/or potato flakes. If used, dehydrated potato will preferably be present in an amount of 20-50 wt.%, based on the weight of the base dough.

It is to be noted that it is possible that the dehydrated potato is from a potato plant which forms starch granules comprising more than 95 wt.%, preferably more than 98 wt.% (based on dry substance) of amylopectin. In that case, any starch that is added separately need not be an amylopectin starch, and can in fact be a starch having a normal amylose content obtained from any botanical source, as the based dough will comprise sufficient amylopectin starch by virtue of the dehydrated potato. In the mixed base dough, in accordance with this embodiment, it is not necessary, nor practical, to distinguish between starch originating from the dehydrated potato and starch added separately.

Again, depending on the nature and taste of the desired snack food product, a base dough according to the invention may comprise one or more other conventional ingredients. Examples of such ingredients include emulsifiers, flavour enhancers (including sugar), colouring agents, fat, oil, carbohydrates (including flour), proteins and combinations thereof. Together these ingredients will typically make up 15 wt.% or less, preferably 10 wt.% or less, of the base dough. The use of oil or fat in the base dough is particularly preferred in snack food products which are baked rather than fried. For baked snack food products it is preferred to use 5-10 wt.%, based on the weight of the base dough, of fat or oil.

In order to prepare a base dough according to the invention, the starch, or starch derivative, and other chosen ingredients are mixed with water. The amount of water is chosen such that it is sufficient to allow the starch to gelatinise during further processing, such as extrusion, and to achieve the desired degree of expansion. Various of the ingredients of the base dough as discussed above contain some moisture. The amount to be added in the preparation of the base dough will depend on the moisture content of these ingredients. It is preferred in accordance with the invention that a base dough comprises from 25 to 45 wt.%, more preferably from 30 to 38 wt.%, based on the weight of the base dough, of water. This water content includes water originating from the ingredients and separately added water.

The base dough may be used for preparing a snack food product by frying, baking, and/or hot air expansion. Typically, expansion will take place during this heating step. It is possible to subject the base dough itself, alone to a frying, baking and/or hot air expansion, but it is also possible that the base dough is combined with other food products and then fried, baked or hot air expanded. Examples of such combined snack food products include coated snacks such as coated nuts and the like. In order to preclude the formation of carcinogenic side products, such as acryl amides, it is preferred that frying is done at a temperature below 170°C. Otherwise, baking, frying, and/or hot air expansion may be performed in any conventional way.

For some types of snack food products, it may be preferred to subject the base dough to a sheeting or an extrusion step prior to baking, frying, and/or hot air expansion. Sheeting may be carried out in any conventional manner. With respect to extrusion, it is generally desirable to use a slightly higher shear and temperature during extrusion of a base dough according to the invention than what is conventional for a base dough comprising 2-3 wt.%, based on the weight of the dough, of salt. A suitable temperature for extruding a base dough according to the invention may be chosen in the range of 40-95°C, preferably in the range of 70-90°C. In case it is desired that the base dough is not dried during or after extrusion, a lower temperature may be used, preferably in the range of 20-50°C.

Optionally, and depending on the type of snack food product that is to be prepared, the extruded base dough may be dried prior to baking and/or frying. In case the base dough is dried prior to baking and/or frying, it is preferred that the moisture content after drying is between 7 and 12 percent by weight, more preferably between 9 and 11 percent by weight.

The invention will be further elucidated by the following, non-restrictive examples.

### Example 1:

Mixes were prepared and extruded on a Berstorff ZE-25 twin-screw extruder according to the information and recipes given in table 1. The indicated materials have the following characteristics:
- Paselli P: drum dried cross linked derivative of normal potato starch (around 20 % amylase), commercially available from Avebe, Veendam, the Netherlands
- Eliane 100: native amylopectin potato starch (> 99 % amylopectin), commercially available from Avebe, Veendam, the Netherlands
- Eliane C100: drum dried amylopectin potato starch (> 99 % amylopectin), commercially available from Avebe, Veendam, the Netherlands.

After extrusion the pellets were dried to a moisture content of 9.5 - 10.5 % and fried for 30 seconds at 165 °C. The expanded products were evaluated on standard characteristics like visual expansion, hardness, crispness and appearance (the results are also given in table 1).

The results show that normal potato starch based products hardly expand when the salt in the recipe is omitted. The Eliane based recipe yields good products in a recipe without the salt addition.

**Table 1, settings and results of example 1- Eliane- and normal potato based extruded and expanded products in recipes with and without salt (mass temperature during extrusion 97 °C).**

| **Experiment code** | **1** | **2** | **3** | **4** | | **1** | **2** | **3** | **4** |
|---|---|---|---|---|---|---|---|---|---|
| | | | | | | | | | |

| **Ingredients (amounts in %)** | | | | | **Evaluation fried products (fried for 30s at 165 °C)** | | | | |
|---|---|---|---|---|---|---|---|---|---|
| Potato granules (ex Rixona) | 40 | 40 | 40 | 40 | Visual expansion (9 = large) | 2.5 | 3.5 | 1 | 3 |
| Native potato starch (ex AVEBE) | 49 | | 52 | | | | | | |
| Eliane 100 (ex AVEBE) | | 49 | | 52 | Smoothness (5 = smooth) | 2 | 2.5 | *1) | 2.5 |
| Paselli P (ex AVEBE) Eliane C100 (ex AVEBE) | 8 | | 8 | | | | | | |
| | | 8 | | 8 | Bite (9 = hard) | 3 | 2.5 | *1) | 2.5 |
| Salt (NaCl) | 3 | 3 | 0 | 0 | Crispiness (9 = very) | 2 | 2.5 | *1) | 2 |
| **Process conditions** | | | | | | | | | |
| Screw speed (rpm) | 160 | 160 | 160 | 160 | Shape (9= regular) | 2.5 | 2.5 | *1) | 3 |
| Product flow in (set) | 2.6 | 2.6 | 2.6 | 2.6 | | | | | |
| Water supply (set) | 45 | 45 | 45 | 45 | Remarks: *1) not evaluated (too low expansion) | | | | |
| Die configuration | 0.7 x 15 mm sleeve | | | | | | | | |
| Screw configuration | 4x transport E37,5; 2xE25; | | | | | | | | |
| | 1x ZB37,5; 6xE25; 2xblister; | | | | | | | | |
| | 1xRing; 1xZB15; 3xE25;Tip. | | | | | | | | |
| Temperature settings | 1^{st} heating zone 60 °C | | | | | | | | |
| | 2^{nd} heating zone 80 °C | | | | | | | | |
| | 3^{rd} heating zone 85 °C | | | | | | | | |
| | Head | 90 °C | | | | | | | |
| Termperature mass (°C) | 97 | 97 | 97 | 97 | | | | | |

### Example 2:

Mixes were prepared and extruded on a Berstorff ZE-25 twin-screw extruder according to the information and recipes given in table 2. After extrusion the pellets were dried to a moisture content of 9.5 - 10.5 % and fried for 15 seconds at 185 °C; they were also fried for 30 seconds at 165 °C.

The expanded products were evaluated on standard characteristics like visual expansion, hardness, crispness and appearance (the results are also given in table 2).

The results show again the much better performance of Eliane based recipes when the salt is omitted. When fried at 190 °C the normal potato starch based product shows reasonable expansion but the product shows hard glassy spots. The texture and expansion of the Eliane based product is much better.

**Table 2, settings and results of example 2 - Eliane- and normal potato based extruded and expanded products in recipes with and without salt. (mass temperature during extrusion 76 °C).**

| **Experiment code** | **5** | **6** | **7** | **9** | |
|---|---|---|---|---|---|
| | | | | | |
| **Ingredients (amounts in %)** | | | | | **Evaluation fried products (fried for30s at 165 °C)** |
| Potato granules (ex rixona) | 40 | 40 | 40 | 40 | Trial 5: good expansion, some glassy hard spots in products. Relative hard bite Trial 6: good expansion and texture, softer bite. Trial 7: Not expanded. Trial 8: good expansion and texture, soft bite |
| Native potato starch (ex | 49 | | 52 | | |
| AVEBE) | | | | | |
| Eliane 100 (ex AVEBE) | | 49 | | 52 | |
| Paselli P (ex AVEBE) | 8 | | 8 | | |
| Eliane C100 (ex AVEBE) | | 8 | | 8 | |
| Salt(NaCl) | 3 | 3 | 0 | 0 | |
| **Process conditions** | | | | | |
| Screw speed (rpm) | 160 | 160 | 160 | 160 | |
| Product flow in (set) | 2.6 | 2.6 | 2.6 | 2.6 | |
| Water supply (set) 50 | 50 | 50 | 50 | 50 | **Evaluation fried products (fried for15s at 185 °C)** |
| Die configuration | 0.7 x 15 mm sleeve | | | | Trial 5: good expansion and texture, relative hard bite |
| Screw configuration | 4x transport E37,5; 2xE25; 1x ZB37,5; 6xE25; 2xblister; 1xRing; 1xZB15; 3xE25; Tip. | | | | Trial 6: good expansion and texture softer bite |
| Temperature settings | 1^{st} heating zone 55 °C | | | | Trial 7: reasonable expansion and texture, hard glassy spots in products, irregular shape. |
| | 2^{nd} heating zone 55 °C | | | | |
| | 3^{rd} heating zone 60 °C | | | | |
| | Head 65 °C | | | | Trial 8: Good expansion and texture, no hard glassy spots observed. |
| Temperature mass (°C) | 76 | 76 | 76 | 76 | |

### Example 3:

Mixes were prepared and extruded on a Buhler pasta press, type FLPA (6D) at a mass temperature of 30 °C and a moisture content of 43%. In these experiment the extrusion step is only used as a forming step in which the dough is given a shape by pressing it through an extruder die. Then the products are cut and fried immediately. The recipes are given in table 3.

The expanded products were evaluated on standard characteristics like visual expansion, hardness, crispness and appearance.

**Table 3, Mix composition of cold formed and fried products.**

| **Ingredients (amounts in %)** | **Experiment code** | | | | | |
|---|---|---|---|---|---|---|
| | **9** | **10** | **11** | **12** | **13** | **14** |
| Potato granules | 40 | 40 | 40 | 40 | 40 | 40 |
| Native potato starch | 50 | | | 52 | | |
| Eliane 100 | | 50 | | | 52 | |
| Waxy corn starch | | | 50 | | | 52 |
| Paselli P | 8 | 8 | 8 | 8 | 8 | 8 |
| Salt | 2 | 2 | 2 | 0 | 0 | 0 |

The product properties showed that omitting the salt in the recipe leads to:
- Potato starch based recipe: Irregular expansion, blisters on product and increased hardness.
- Eliane based recipe: no effects noticed.
- Waxy corn starch based recipe: no effects noticed.

### Example 4:

Mixes were prepared and extruded on a Berstorff ZE-25 twin-screw extruder at a mass temperature of 95 °C.

The recipes are given in table 4. After extrusion the pellets were dried to a moisture content of 9.5 - 10.5 % and baked for 2 - 3 minutes at 260 °C.

**Table 4, Recipes of extruded and baked products.**

| **Ingredients (Amounts in %)** | **Experiment code** | | | | | |
|---|---|---|---|---|---|---|
| | **15** | **16** | **17** | **18** | **19** | **20** |
| Potato granules | 40 | 40 | 40 | 40 | 40 | 40 |
| Native potato starch | 50 | | | 52 | | |
| Eliane 100 | | 50 | | | 52 | |
| Waxy corn starch | | | 50 | | | 52 |
| Paselli P | 8 | 8 | 8 | 8 | 8 | 8 |
| Salt | 2 | 2 | 2 | 0 | 0 | 0 |

The results showed that the Eliane and waxy corn based recipes are not sensitive on the salt content in the recipe. The product properties like expansion, crispiness, hardness and shape do not change when no salt is added to the recipe.

The "salt-less" potato based recipe showed less expansion and an irregular shape, also the products were less crisp and harder when compared to benchmark which contains 2 % salt.

### Example 5:

The dried pellets which are described in example 4 were fried for 15 seconds at 190 °C. The results showed that omitting the salt in the recipe leads to:
- Potato starch based recipe: Irregular expansion, blisters on product and increased hardness.
- Elaine based recipe: no effects noticed.
- Waxy corn starch based recipe: no effects noticed.

## Claims

1. A base dough for preparing an expanded snack food product comprising:
- a starch having an amylopectin content of at least 95 wt.%, based on dry weight, and/or a derivative thereof
- at most 0.5 wt.%, based on the weight of the base dough, of salt
- water.

2. A base dough according to claim 1, wherein the starch is a root or tuber starch.

3. A base dough according to claim 2, wherein the starch is a potato starch.

4. A base dough according to any of the preceding claims, wherein part of the starch, preferably up to 25 wt.%, based on the weight of the starch, is pre gelatinized starch.

5. A base dough according to any of the preceding claims, wherein the starch derivative is a cross-linked starch.

6. A base dough according to any of the preceding claims, wherein the starch derivative is a stabilised starch.

7. A base dough according to any of the preceding claims comprising less than 0.1 wt.%, based on the weight of the base dough, of salt and preferably comprising no salt.

8. A base dough according to any of the preceding claims further comprising dehydrated potato, such as potato granules and/or potato flakes.

9. A base dough according to claim 8 comprising 20-50 wt.%, based on the weight of the base dough, of dehydrated potato.

10. A base dough according to any of the preceding claims further comprising up to 15 wt.%, based on the weight of the base dough, of conventional ingredients such as emulsifiers, flavour enhancers, colouring agents, fat, oil, carbohydrates, proteins and combinations thereof.

11. A process for preparing an expanded snack food product comprising subjecting a base dough according to any of the preceding claims to a baking, frying, and/or hot air expansion step.

12. A process according to claim 11, wherein the base dough is sheeted or extruded prior to baking, frying, and/or hot air expansion.

13. A process according to claim 12 comprising drying the extruded base dough prior to baking, frying, and/or hot air expansion.

14. An expanded snack food product obtainable by a process according to any of the claims 11-13.

15. The use of a starch having an amylopectin content of at least 95 wt.%, based on dry weight, and/or a derivative thereof for imparting favourable texture and expansion characteristics on a snack food product which is expanded in the absence of salt.
